# EUROPEAN PATENT APPLICATION

(11) **EP 1 826 228 A1**
(43) Date of publication of application: **29.08.2007**
(21) Application number: 05809381.6
(22) Date of filing: 22.11.2005
(51) Int. Cl.: C08G 65/18, C08G 59/24, B41J 2/01, C09D 11/00

(54) **COMPOSITION CAPABLE OF CATIONIC POLYMERIZATION AND ACTINIC ENERGY RAY CURING AND METHOD OF IMAGE FORMING USING THE COMPOSITION**

(30) Priority: 15.12.2004 JP 2004362756
(71) Applicant: Konica Minolta Medical & Graphic, Inc., Tokyo 163-0512 (JP); TOAGOSEI CO., LTD., Tokyo 105-8419 (JP)
(72) Inventor: SASA, Nobumasa, Tokyo, 1928505 (JP)
(74) Representative: Rees, Alexander Ellison
(86) International application number: PCT/JP2005/021440
(87) International publication number: WO 2006/064638

(57) **Abstract**

Disclosed is a composition that is curable by cationic polymerization initiated by active energy beam, which is not affected by humidity of atmosphere and has superior curing property and superior adhesion property to a recording material, while being able to provide long storage stability without inhibiting curing property. Also disclosed is an image forming method using the composition, the method being able to provide a high quality image with no blur. Accordingly, the composition that is curable by cationic polymerization initiated by active energy beam, in which a cation polymerizing compound includes at least a cationic polymerization initiator, has a moisture content of 2.5 parts by mass or less, according to Karl Fisher method.

## Description

### FIELD OF THE INVENTION

The present invention relates to a composition that is curable by cationic polymerization initiated by active energy beam, which is not affected by humidity of atmosphere and has superior curing property. The present invention also relates to an image forming method using the composition as an ink for ink jet, the ink having superior adhesion property to recording material and thus a high quality image that has no blur can be obtained.

### DESCRIPTION OF THE BACKGROUND

As for a fast-drying ink for printing, an ink composition that is curable by radical polymerization initiated by irradiating the ink composition with active energy beam, such as ultraviolet ray and the like, has been known. However, with respect to such ink composition, there was a problem that curability is inhibited under existence of oxygen.

In recent years, an ink composition that is curable by cationic polymerization initiated by irradiating the ink composition with active energy beam has been proposed. That is, an ink composition that includes an oxetane compound, a photocationic polymerization initiator and a pigment, wherein an epoxy compound is added as needed, has been proposed (Refer to Japanese Patent Application Publication (Laid open) Tokukaihei 8-143806 and Japanese Patent Application Publication (Laid open) No. 2003-252979.).

Cationic polymerization is initiated by existence of a cation that is generated from the photocationic polymerization initiator by irradiating the photocationic polymerization initiator with an ultraviolet ray and the like. Therefore, since polymerization is not inhibited by oxygen, there is no limitation that curing must be conducted under inert atmosphere and thus has an advantage that rapid and complete polymerization can be conducted under aerial atmosphere.

However, properties that curing speed considerably decreases under high humidity and that the curing speed depends on the temperature, can be mentioned as problems. Accordingly, there was a problem that in a case where the ink composition for ink jet which has environment dependency is used as ink, image quality will depend on the environment.

Further, in a case where a cation polymerizing compound such as oxetane compounds and epoxy compounds is stored for a long time, the cation polymerizing compound being added with cationic polymerization initiator, since cation is sometimes self-generated from the cationic polymerization initiator even though ultraviolet ray is shielded, the generated cation causes polymerization of polymerizing compounds. Therefore, there are problems that viscosity increases and gelation occurs.

In order to solve the above problems, addition of basic compound to a composition which has a cationic polymerization initiator and a cation polymerizing organic material as essential components has been proposed. As for an example of the basic organic compound, basic inorganic compounds such as hydroxides, carbonates, and alcoholates of alkaline metals and alkaline earth metals; basic organic compounds such as amines and other basic compounds including nitrogen atom, can be mentioned. It is well known that storage stability can thus be improved without a loss in ring opening polymerization property of the oxetane compounds (Refer to Patent Document 1 and Patent Document 2). Patent Document 1: Japanese Patent Application Publication (Laid open) No. 2000-186079 Patent Document 2: Japanese Patent Application Publication (Laid open) No. 2000-327672

### DISCLOSURE OF THE INVENTION

### PROBLEMS TO BE SOLVED BY THE INVENTION

However, it became apparent that these additives also decrease curing rate.
That is, a compound that is curable by cationic polymerization which achieves both of sensitivity and storage stability, is not yet provided even to this day.

The present invention has been made with respect to the above circumstances, and an object is to provide a composition that is curable by cationic polymerization initiated by active energy beam, which is not affected by humidity of atmosphere and has superior curing property and superior adhesion property to a recording material, while being able to provide long storage stability without inhibiting curing property. Another object is to provide an image forming method using the composition that can provide a high quality image with no blur.

### MEANS TO SOLVE THE PROBLEM

According to a first aspect of the present invention, there is provided a composition that is curable by cationic polymerization initiated by active energy beam, in which a cation polymerizing compound includes at least a cationic polymerization initiator, wherein a moisture content of the composition according to Karl Fisher method is 2.5 parts by mass or less.

Preferably, the cation polymerizing compound comprises an oxetane compound and a cycloaliphatic epoxy compound.

Further, the oxetane compound is a compound expressed by the following general formula (1) 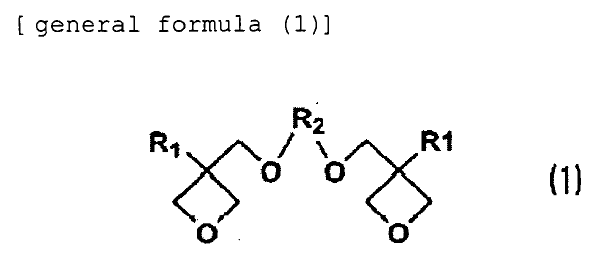 (where R1 represents a hydrogen atom, an alkyl group with a carbon number of 1-6, a fluoro alkyl group with a carbon number of 1-6, an aryl group, an allyl group, a furyl group or a thienyl group and R2 represents an n-valent liner alkyl group or an n-valent branched alkyl group, each having a carbon number of 4-18, the n representing an integer of 2-4).

Further, the composition that is curable by cationic polymerization initiated by active energy beam further comprises at least one of a compound including an oxetanyl group, which is other than the one expressed by the general formula (1), or a compound including an epoxy group.

Further, the composition that is curable by cationic polymerization initiated by active energy beam further comprises a compound including an epoxy group, which is other than the cycloaliphatic epoxy compound.

According to a second aspect of the present invention, there is provided an image forming method that uses the composition that is curable by cationic polymerization initiated by active energy beam of any one of claims 1-5 as a composition for ink jet ink, comprising the steps of: jetting an ink droplet onto a surface of a recording material, by a recording head provided with a nozzle capable of controlling jetting of the ink droplet; and irradiating the ink with an active energy beam to cure the ink after allowing the ink to land on the recording material.

### TECHNICAL MERITS OF THE INVENTION

According to the first aspect of the present invention, a composition that is curable by cationic polymerization initiated by active energy beam, which is not affected by humidity of atmosphere and has superior curing property and superior adhesion property to a recording material, while being able to provide long storage stability without inhibiting curing property can be provided.
According to the second aspect of the present invention, an image forming method using the composition that can provide a high quality image with no blur, can be provided.

### BEST MODE FOR CARRYING OUT THE INVENTION

Hereinafter, the composition that is curable by cationic polymerization initiated by active energy beam, and the image forming method used in the present invention will be described.

As for the cation polymerizing compound, cation polymerizing vinyl compounds, lactones, and cyclic ethers can be mentioned in general.

For example, as for the cation polymerizing vinyl compounds, styrene, vinyl ether and the like can be mentioned. As for the cyclic ethers, other than oxetane compounds and epoxy compounds, spiro ortho esters, bicyclo ortho esters, cyclic carbonates and the like can be mentioned.

Here, the oxetane compounds are compounds having an oxetane ring, which is a four-membered cyclic ester, as shown in the following general formula (2).

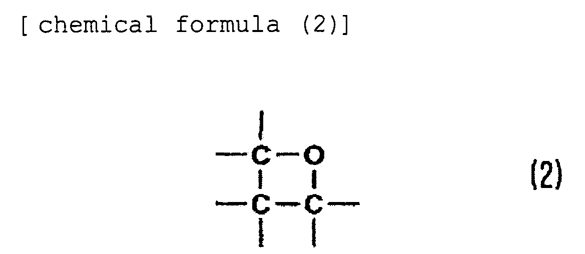

The epoxy compounds are compounds having an oxirane group, which is a three-membered ring, as shown in the following general formula (3).

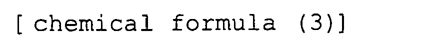

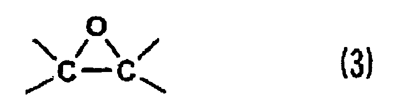

Among these, the cation polymerizing compound is preferably cyclic ethers that undergo ring opening polymerization by the action of cation. More preferably, the cation polymerizing compound is oxetane compounds and cycloaliphatic epoxy compounds. Further, with respect to a cation polymerizing compound that has superior curing property, it is especially preferable to use a mixture of oxetane compound and cycloaliphatic epoxy compound. In such case, mixture ratio of the oxetane compound and the cycloaliphatic epoxy compound (oxetane compound /cycloaliphatic epoxy compound) is generally 95 / 5 to 5 /95 by mass ratio, and is preferably 90 / 10 to 50 / 50 by mass ratio. In a case where the amount of the oxetane compound is too small, cured material tends to have low flexibility and solvent resistance, while in a case where the amount of the oxetane compound is too large, risk of defective curing under high humidity environment increases.

The oxetane compound used in the present invention has moisture content of 2.5 mass percent or less, when measured under condition of absolute humidity of 0.02kg/kg, using the Karl Fisher method. In particular, the oxetane compound used in the present invention is an oxetane compound shown by the afore-mentioned general formula (1).

As for particular examples of the oxetane compound, the following compounds can be mentioned for example.

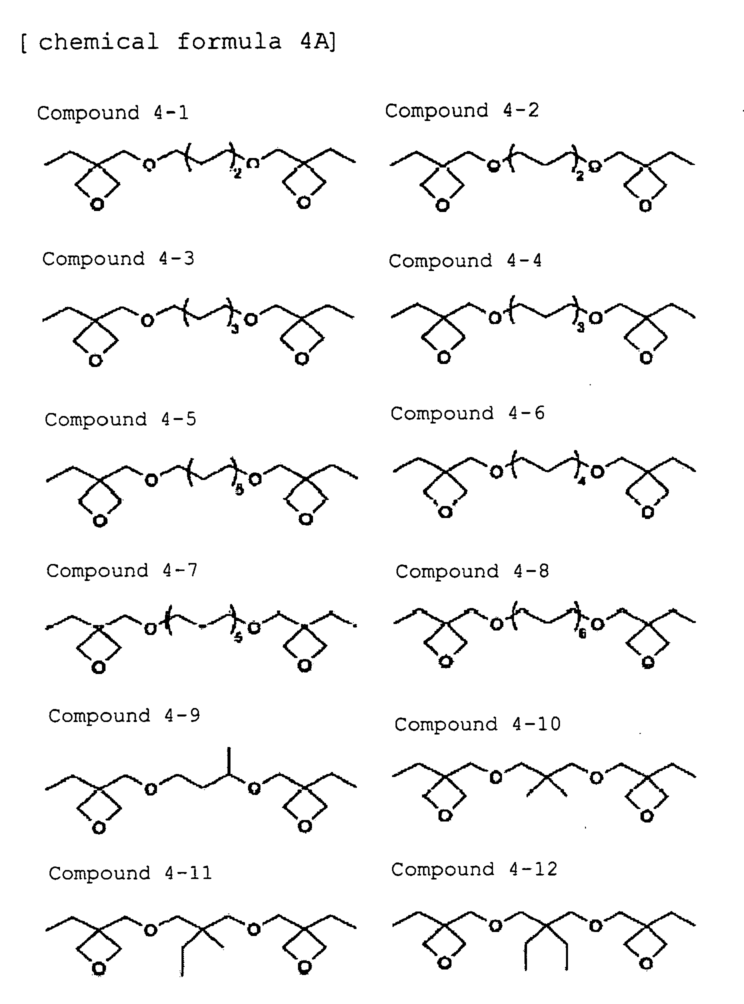

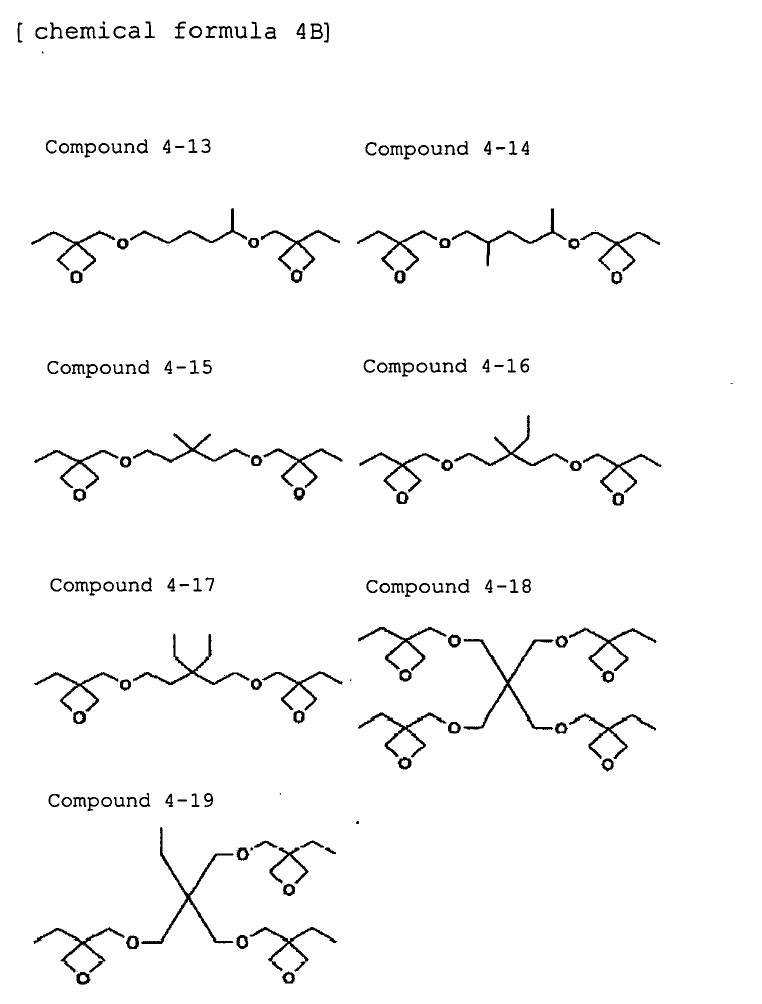

As for the preferable cycloaliphatic epoxy compound, cycloaliphatic epoxy resins such as 3,4-epoxy cyclohexylmethyl-3',4'-epoxycyclohexane carboxylate (available under the trade names of UVR6105, UVR6110, and CELLOXIDE2021), bis(3,4-epoxycyclohexylmethyl) adipate (available under the trade name of UVR6128), vinyl cyclohexene monoepoxide (available under the trade name of CELOXIDE2000), ε-caprolactone modified 3,4-epoxycyclohexylmethyl 3',4'-epoxycyclohexane carboxylate (available under the trade name of CELOXIDE2081), 1-methyl-4-(2-methyloxyranyl)-7-oxabicyclo[4,1,0]heptane (available under the trade name of CELOXIDE 3000) and the like can be mentioned. The afore-mentioned UVR6105, UVR6110 and UVR6128 are available from Union Carbide Corporation. The afore-mentioned CELOXIDE2000, CELOXIDE2021, CELOXIDE2081 and CELOXIDE3000 are available from DAICEL CHEMICAL INDUSTRIES, LTD. Here, UVR6105 is a product with lower viscosity, which corresponds to UVR6110.

Here, specific examples of the cation polymerizing compound are mentioned in Japanese Patent Application Publication (Laid open) Tokukaihei 8-143806, Japanese Patent Application Publication (Laid open) Tokukaihei 8-283320, Japanese Patent Application Publication (Laid open) No. 2000-186079, Japanese Patent Application Publication (Laid open) No. 2000-327672 and the like, and the present invention can be implemented by arbitrarily selecting from the compounds listed therein.

As for the cationic polymerization initiator, other than the known sulfonium salt and ammonium salt, diaryl iodonium salt, triaryl sulfonium salt and the like can be mentioned. The cationic polymerization initiator can be arbitrarily selected from the ones cited in Japanese Patent Application Publication (Laid open) Tokukaihei 8-143806 and Japanese Patent Application Publication (Laid open) Tokukaihei 8-283320. Further, the cationic polymerization initiator can be used as purchased. As for examples of commercially available products, the ones available under the trade names of CI-1370, CI-2064, CI-2397, CI-2624, CI-2639, CI-2734, CI-2758, CI-2823, CI-2855 and CI-5102 (all of them manufactured by Nippon Soda Co., Ltd.), the one available under the trade name of PHOTOINITIATOR2047 (manufactured by Rhodia), the ones available under the trade names of UVI-6974 and UVI-6990 (both of them manufactured by Union Carbide Corporation), and the like can be mentioned.

The amount of the cationic polymerization initiator depends on the type of the cationic polymerization initiator which is used, type and amount ratio of the cation polymerizing compound which is used, condition of use and the like. In practical use, with respect to 100 parts by mass of the cation polymerizing compound, the cationic polymerization initiator is used by 0.1-20 parts by mass in general, preferably by 1-10 parts by mass, and more preferably by 3-5 parts by mass. In a case where the cationic polymerization initiator is used in a large amount, the polymerization reaction proceeds rapidly, although storage stability tends to be impaired. In a case where the cationic polymerization initiator is used in a small amount, the curing property degrades.

In the present invention, moisture content of the composition that is curable by cationic polymerization initiated by active energy beam depends on the type and amount ratio of the cation polymerizing compound, the type and amount ratio of the cationic polymerization initiator, and the type and amount ratio of other additives. Here, with respect to the cation polymerizing composition, the moisture content is required to be 2.5 mass percent or less, when measured under condition of absolute humidity of 0.02kg/kg, using the Karl Fisher method.

Preferably, the moisture content of the composition that is curable by cationic polymerization initiated by active energy beam is 1.5 mass percent or less, when measured under condition of absolute humidity of 0.02kg/kg, using the Karl Fisher method. In a case where the moisture content is excess, curing property of the cation polymerizing compound cannot be improved sufficiently, or water separates out under low-temperature conditions, resulting in precipitation of pigment that was stably dispersed.

The composition that is curable by cationic polymerization initiated by active energy beam according to the present invention can be manufactured by mixing the cation polymerizing compound, the cationic polymerization initiator and other additives thoroughly. In a case where additives such as pigment and the like is used, a ball mill, a sand mill, an atriter, a rolling mill, an agitator, a henschel mixer, a colloid mill, an ultrasonic homogenizer, a pearl mill, a wet-type jet mill, a paint shaker and the like can be used for example. Further, when pigment is dispersed, a dispersing agent may be added. As for the dispersing agent, it is preferable to use a polymer-type dispersing agent, and Solsperse series available from Avecia Group Inc., can be mentioned. In addition, a synergist that corresponds to each type of pigment may be used as a dispersing agent assistant. The dispersing agent and the dispersing agent assistant are preferably added by 1-50 parts by mass respect to 100 parts by mass of pigment. A solvent or a polymerizing compound is used as dispersing vehicle. With respect to the ink which is curable by active energy beam of the present invention, it is preferable that the ink does not include any solvent since the ink is reacted and cured immediately after it lands. In a case where solvent remains in the cured image, solvent resistance decreases and a problem relating to VOC of the remaining solvent arises. Therefore, it is preferable to use the polymerizing compound as the vehicle, instead of solvent. Further, it is preferable to use the monomer with the lowest viscosity, concerning the dispersing ability.

With respect to dispersion of the pigment, average particle diameter of the pigment particle is preferably 0.08-0.5 µm, maximum particle diameter is preferably 0.3-10 µm, and more preferably 0.3-3 µm. To achieve this, the pigment, the dispersing agent, the dispersing vehicle, dispersing condition and filtering condition are suitably selected.

The viscosity of the composition, which is curable by cationic polymerization initiated by active energy beam, according to the present invention can be suitably adjusted by selecting a molecular weight and combination of the cation polymerizing compound, depending on the application. Especially, in a case where the composition according to the present invention is used as a vehicle of an ink for professional-use ink jet printer, the ink being curable by ultraviolet ray, viscosity under 25 degrees Celsius is adjusted so as to be 5-50 mPa·s, preferably 10-30 mPa·s.

The composition according to the present invention, which is curable by cationic polymerization initiated by active energy beam, can form an image through an ordinary procedure, by applying active energy beam such as ultraviolet ray, X-ray and electron ray, or by applying heat to initiate polymerization reaction, to cure the composition. Here, the composition according to the present invention, which is curable by cationic polymerization initiated by active energy beam, can be added with various kinds of additives such as pigment, dye, sensitizer, fire retardant, and antistatic agent, as needed. The composition is suitably used for ink, vehicle, polishing varnish, paint, adhesive, prepreg, sealing material, laminated plates, molding material and the like for example.

### [Example]

The present invention will be described further specifically by the following examples. However, the present invention is not limited to the examples.

### [Preparation of Ink]

First of all, ink was prepared by the following procedures.

### (examples 1-7)

According to the formulation shown in Table 1, cycloaliphatic epoxy compound, oxetane compound, cationic polymerization initiator and various kinds of additives were mixed thoroughly. Compositions that cure by cationic polymerization initiated by active energy beam were prepared as ink used for the examples of the present invention (ink Nos. 1-7).

### (comparison example 1)

With respect to example 1, CELOXIDE 3000 as the epoxy compound was changed to CELOXIDE 2021P, OXT-10 as the oxetane compound was changed to OXT-221. Other procedures were the same as the ink No. 1, and thus ink used as comparison example (ink No. 8) was prepared.

### [Evaluation of Properties]

Properties of the prepared inks were evaluated in accordance with the following procedures.

### (viscosity)

Viscosity of ink was measured by using vibration type viscosity meter VISCOMATE VM-1G-MH, manufactured by YAMAICHI. CO. LTD., under temperature condition of 25 degrees Celsius.

### (moisture content)

After preparation of the inks, the inks were placed under environment of absolute humidity of 0.02kg/kg (for example, 29 degrees Celsius, 80%RH) for 24 hours. Immediately after being subject to the aforementioned conditions, the moisture contents of the inks were measured by the Karl Fisher method.
As for the measuring apparatus, KF-100 manufactured by Mitsubishi Chemical Corporation was used.

Formulation of each ink and result of measurement are shown in Table 1.

**[Table 1A]**

| Ink No. | Pigment/Dispersing Agent | | Epoxy Compound | | Oxetane Compound | | | | |
|---|---|---|---|---|---|---|---|---|---|
| | Type | *1 | Type | *1 | Type | *1 | Compound | Moisture Content % | *1 |
| 1 | P1/S1 | 3.0/2.0 | *2 | 30 | - | - | 4-10 | 1 | 60 |
| 2 | P1/S1 | 3.0/2.0 | *2 | 35 | - | - | 4-6 | 0.8 | 55 |
| 3 | P1/S1 | 3.0/2.0 | *2 | 30 | - | - | 4-14 | 1 | 60 |
| 4 | P1/S1 | 3.0/2.0 | *3 | 30 | OXT212 | 20 | 4-14 | 1 | 40 |
| 5 | P1/S1 | 3.0/2.0 | *3 | 30 | OXT221 | 30 | 4-15 | 0.8 | 30 |
| 6 | P1/S1 | 3.0/2.0 | *4 | 30 | MPO | 30 | 4-18 | 1.2 | 30 |
| 7 | P1/S1 | 3.0/2.0 | *2 | 30 | OXT212 | 20 | 4-19 | 1.5 | 40 |
| 8 | P1/S1 | 3.0/2.0 | *3 | 30 | OXT221 | 60 | - | - | - |

| | | | | | | | | | |
|---|---|---|---|---|---|---|---|---|---|
| *1: addition amount (parts by mass) *2: CELOXIDE 3000 *3: CELOXIDE 2021P *4: Cyracure UVR-6216 | | | | | | | | | |

**[Table 1B]**

| Ink No. | Photoinitiator | | Moisture Content % | Viscosity mPa·s |
|---|---|---|---|---|
| | Type | *1 | | |
| 1 | SP/152 | 5 | 1.4 | 30 |
| 2 | SP/152 | 5 | 1.3 | 30 |
| 3 | SP/152 | 5 | 1.5 | 27 |
| 4 | SP/152 | 5 | 1.2 | 30 |
| 5 | SP/152 | 5 | 1.5 | 30 |
| 6 | SP/152 | 5 | 1.6 | 27 |
| 7 | SP/152 | 5 | 2 | 28 |
| 8 | SP/152 | 5 | 3.5 | 27 |

| | | | | |
|---|---|---|---|---|
| *1: addition amount (parts by mass) | | | | |

In Table 1, the symbols refer to the followings.

### <pigment>

P1: C.I. Pigment Blue 15:3

### <pigment dispersing agent>

S1: Solsperse 32000 (manufactured by Avecia)

### <oxyrane group containing compound>

CELOXIDE3000: cycloaliphatic epoxy compound (manufactured by Daicel-UCB Company, Ltd.)
CELOXIDE 2021P: cycloaliphatic epoxy compound

### (manufactured by Daicel-UCB Company, Ltd.)

SYRACURE UVR-6216: epoxylated α-olefin (manufactured by
Dow Chemical Company)

### <photocationic polymerization initiator>

SP-152: Sulfonium salt (ADEKAOPTOMER-SP-152 manufactured by Adeka Corporation)

### <oxetane ring containing compound>

OXT-221: oxetane compound (Manufactured by Toagosei. Co. Ltd.)
OXT-212: oxetane compound (Manufactured by Toagosei. Co. Ltd.)
MPO: 2-(4-methoxy-phenyl)-3,3-dimethyl-oxetane (oxetane disclosed in Japanese Patent Application Publication (Laid open) No. 2001-181386)

### [Formation of Image]

Subsequently, image was formed using the afore-mentioned inks 1-8, in accordance with the following printing method 1 and printing method 2. Here, with respect to the image forming method of the present examples, cation polymerizing compound is used as composition for ink jet ink, ink droplet is jetted on a recording material by using a nozzle which is capable of controlling jetting of the ink droplet selectively, the ink droplet after landing is irradiated with active energy beam, and thus the ink is cured.

### (printing method 1)

Thin film of ink (10 µ in thickness) was formed on one surface of a polyethylene terephthalate (PET) film. The obtained film was allowed to pass under a 80 watt high pressure mercury lamp by a belt speed of 20 m/min to irradiate the thin film with ultraviolet ray.

### (printing method 2)

A nozzle portion of an ink jet nozzle of piezo-type, the ink jet nozzle being able to provide droplet size of 7pl (nozzle pitch 360 dpi, wherein dpi in the present invention means number of dots per 2.54 cm), was heat-controlled to 50 degrees Celsius. Each of the obtained inks was jetted through this nozzle by using a corona treated polyethylene terephthalate film as a recording material, and thus solid image and text in MS Mincho font with point size of 6 point were printed.
A fluorescent tube that has main peak at 308 nm was used as a light source, and under the conditions of location immediately below the light source and illumination intensity of the recording material surface being 10 mW/cm², exposure to light was started 0.2 seconds after the ink landed on the recording material and the exposure to light was terminated after 0.7 seconds. Here, exposure energy was 5 mJ/cm².
With respect to both of the printing methods, printing was carried out under low humidity environment (23 degrees Celsius, 30 %RH), and high humidity environment (27 degrees Celsius, 80 %RH).

The following evaluations were conducted for each of the obtained images.

### (curability of ink)

Curability of ink was evaluated for each of the images formed under each environment, in accordance with the following criteria.
Good: The image has no tackiness when the image was touched immediately after exposure to light.
Partly Defective: There is some tackiness when the image was touched immediately after exposure to light, but there is no tackiness after 1 minute.
Defective: Tackiness remains even after 1 minute from exposure to light.

### (adherence to recording material (medium))

To the solid image formed under each environment, Cellotape (registered trademark) with 25 mm width was attached and was strongly pressure-bonded. Subsequently, the Cellotape was peeled quickly with a peeling angle of 90 degrees, and the state of image after isolation was observed by visual inspection. Evaluation of adherence to recording material was conducted in accordance with the following criteria.
Good: Image is not peeled off by peeling the tape.
Partly Defective: Image is partly peeled off by peeling the tape.
Defective: Image is entirely peeled off by peeling the tape.

### (image blur resistance)

The text in MS Mincho font with point size of 6 point, which were formed under each environment were observed using a loupe, to observe a state of dots that are adjacent with each other. Evaluation of image blur resistance was conducted in accordance with the following criteria.
Good: There is substantially no blur between the two dots.
Partly Defective: There is a small degree of blur between the two dots.
Defective: The dots blur to a large extent.

### (storage stability)

Each of the inks was filled into containers. Subsequently, the containers were subject to an accelerated test under a high temperature environment of approximately 60 degrees Celsius for one month, in a state with the lid of a container closed (closed system), or in a state with the lid of a container opened (opened system). The states of the inks were evaluated by visual inspection. The evaluation was conducted in accordance with the following criteria.
Good: No gellation was observed for both of the inks of closed system and opened system.
Partly Defective: No gellation was observed for the ink of closed system.
Defective: Gellation was observed for both of the inks of closed system and opened system.

The results of afore-mentioned evaluation are shown in Table 2.

**[Table 2]**

| Ink No. | Printing Method | Printing Environment (temperature in degrees Celsius, %RH) | Evaluation Result | | | | Others |
|---|---|---|---|---|---|---|---|
| | | | Ink Curability | Adherence to Base Material | Image Blur Resistance | Storage Stability | |
| 1 | 1 | 23,30 | Good | Good | Good | Good | Present Invention |
| | 1 | 27,80 | Good | Good | Good | | Present Invention |
| | 2 | 23,30 | Good | Good | Good | | Present Invention |
| | 2 | 27,80 | Good | Good | Good | | Present Invention |
| 2 | 2 | 23,30 | Good | Good | Good | Good | Present Invention |
| | 2 | 27,80 | Good | Good | Good | | Present Invention |
| 3 | 2 | 23,30 | Good | Good | Good | Good | Present Invention |
| | 2 | 27,80 | Good | Good | Good | | Present Invention |
| 4 | 2 | 23,30 | Good | Good | Good | Good | Present Invention |
| | 2 | 27,80 | Good | Good | Good | | Present Invention |
| 5 | 1 | 23,30 | Good | Good | Good | Good | Present Invention |
| | 1 | 27,80 | Good | Good | Good | | Present Invention |
| | 2 | 23,30 | Good | Good | Good | | Present Invention |
| | 2 | 27,80 | Good | Good | Good | | Present Invention |
| 6 | 2 | 23,30 | Good | Good | Good | Good | Present Invention |
| | 2 | 27,80 | Good | Good | Good | | Present Invention |
| 7 | 2 | 23,30 | Good | Good | Good | Good | Present Invention |
| | 2 | 27,80 | Good | Good | Good | | Present Invention |
| 8 | 1 | 23,30 | Partly Defected | Partly Defected | Partly Defected | Partly Defected | Present Invention |
| | 1 | 27,80 | Defected | Defected | Defected | | Present Invention |
| | 2 | 23,30 | Partly Defected | Partly Defected | Partly Defected | | Present Invention |
| | 2 | 27,80 | Defected | Defected | Defected | | Present Invention |

As apparent from Table 2, examples of ink Nos. 1-7 shows superior properties. In contrast, comparison example of ink No. 8 has defected properties.

### INDUSTRIAL APPLICABILITY

As described above, the composition that is curable by cationic polymerization initiated by active energy beam and the image forming method using the composition according to the present invention is not influenced by humidity of the environment, and thus they are suitable for application in the field of image forming, in which curability and adherence to recording material provides superior image.

## Claims

1. A composition that is curable by cationic polymerization initiated by active energy beam, in which a cation polymerizing compound includes at least a cationic polymerization initiator, wherein a moisture content of the composition according to Karl Fisher method is 2.5 parts by mass or less.

2. The composition that is curable by cationic polymerization initiated by active energy beam of claim 1, wherein the cation polymerizing compound comprises an oxetane compound and a cycloaliphatic epoxy compound.

3. The composition that is curable by cationic polymerization initiated by active energy beam of claim 2, wherein the oxetane compound is a compound expressed by the following general formula (1), 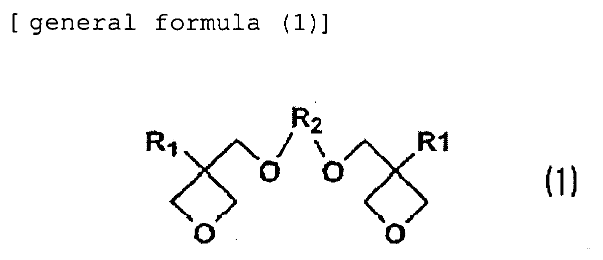 (where R1 represents a hydrogen atom, an alkyl group with a carbon number of 1-6, a fluoro alkyl group with a carbon number of 1-6, an aryl group, an allyl group, a furyl group or a thienyl group and R2 represents an n-valent liner alkyl group or an n-valent branched alkyl group, each having a carbon number of 4-18, the n representing an integer of 2-4).

4. The composition that is curable by cationic polymerization initiated by active energy beam of claim 3, further comprising at least one of a compound including an oxetanyl group, which is other than the one expressed by the general formula (1), or a compound including an epoxy group.

5. The composition that is curable by cationic polymerization initiated by active energy beam of any one of claims 2-4, further comprising a compound including an epoxy group, which is other than the cycloaliphatic epoxy compound.

6. An image forming method that uses the composition that is curable by cationic polymerization initiated by active energy beam of any one of claims 1-5 as a composition for ink jet ink, comprising the steps of:
jetting an ink droplet onto a surface of a recording material, by a recording head provided with a nozzle capable of controlling jetting of the ink droplet; and
irradiating the ink with an active energy beam to cure the ink after allowing the ink to land on the recording material.
